# EUROPÄISCHE PATENTSCHRIFT

(11) **EP 2 681 814 B1**
(45) Veröffentlichungstag und Bekanntmachung des Hinweises auf die Patenterteilung: **27.05.2015**
(21) Anmeldenummer: 11860237.4
(22) Anmeldetag: 04.03.2011
(51) Int. Cl.: H04B 10/291

(54) **VERFAHREN UND VORRICHTUNG ZUR VERSTÄRKUNG OPTISCHER, IN EINEM MEHRKERN-LICHTWELLENLEITER GEFÜHRTER SIGNALWELLEN**
METHOD AND DEVICE FOR AMPLIFYING OPTICAL SIGNAL WAVES GUIDED IN A MULTI-CORE OPTICAL FIBRE
PROCÉDÉ ET DISPOSITIF D'AMPLIFICATION D'ONDES DE SIGNAL OPTIQUES GUIDÉES DANS UN GUIDE OPTIQUE À PLUSIEURS COEURS

(43) Veröffentlichungstag der Anmeldung: 08.01.2014
(73) Patentinhaber: Technische Universität Dortmund, 44227 Dortmund (DE)
(72) Erfinder: KRUMMRICH, Peter, 44149 Dortmund (DE)
(74) Vertreter: Cohausz Hannig Borkowski Wißgott
(86) Internationale Anmeldenummer: PCT/EP2011/001079
(87) Internationale Veröffentlichungsnummer: WO 2012/119608

(56) Entgegenhaltungen:
- EP-A1- 2 131 454
- WO-A2-2005/060054
- US-A1- 2011 032 604

## Beschreibung

Die Erfindung betrifft ein Verfahren und eine Vorrichtung zur Verstärkung optischer in einem ersten Mehrkern-Lichtwellenleiter geführter Signalwellen, bei dem der erste Mehrkern-Lichtwellenleiter mehrere Kerne mit einem vorgegebenen Kernabstand und einer vorgegebenen Geometrie der Kerne zueinander umfasst und in jedem Kern wenigstens ein Signalwellenmodus ausbreitungsfähig ist und wobei jede Signalwelle in einem optisch gepumpten verstärkungsaktiven Lichtwellenleiter verstärkt wird.

Die Erfindung betrifft somit ein Verfahren und eine Vorrichtung, die in der Kommunikationstechnik bei optischen Übertragungssystemen zum Einsatz kommen, bei denen Informationen als Licht-Signalwellen über Lichtwellenleiter zwischen einem optischen Sender und einem optischen Empfänger kommuniziert werden. Lichtwellenleiter sind dabei jegliche optische Systeme, die geeignet sind, eine Licht-Signalwelle zwischen den Enden eines solchen Lichtwellenleiters im Lichtleitermedium propagieren zu lassen, insbesondere durch das physikalische Prinzip der Totalreflexion. Solche Lichtwellenleiter werden auch als Lichtleitfaser bezeichnet.

Sowohl die erreichbaren Gesamtdatenraten als auch die überbrückbaren Entfernungen sind beschränkt. Zur Steigerung der Datenraten wurden Lichtwellenleiter entwickelt, bei denen in einer Ausführung mit Einkern-Lichtwellenleitern Signalwellen mit mehreren verschiedenen Wellenlängen und/oder mehreren transversalen Moden gleichzeitig innerhalb eines Kerns übertragen werden. In einer anderen Ausführung wurden Mehrkern-Lichtwellenleiter entwickelt, bei denen in jedem Kern mindestens ein Signalwellenmodus ausbreitungsfähig ist. Auch hier können in jedem der Kerne mehrere Signalwellen mit verschiedenen Wellenlängen nach dem Prinzip des Wellenlängenmultiplexing überlagert werden.

Mehrkern-Lichtwellenleiter weisen dabei üblicherweise eine hexagonale Geometrie der einzelnen Kerne zueinander auf, wobei in einfachster Konfiguration um einen zentralen Kern sechs weitere Kerne angeordnet sind, sich somit 7 Kerne ergeben. Ebenfalls sind Mehrkern-Lichtwellenleiter mit 19, 37 oder mehr Kernen bekannt. Mit solchen Mehrkern-Lichtwellenleitern lassen sich demnach größere Gesamtdatenraten erzielen, als mit Einkem-Lichtwellenleiter, wenngleich sie komplexer zu handhaben sind.

Alle Lichtwellenleiter weisen eine Dämpfung auf, so dass zur Überbrückung sehr großer Distanzen Verstärker zum Einsatz kommen müssen. Bei Einkern-Lichtwellenleitern ist es bekannt, optisch gepumpte verstärkungsaktive Einkern-Lichtwellenleiter zum Einsatz zu bringen, deren Kern laseraktive oder Ramanaktive Verstärkungseigenschaften aufweist.

Laseraktive Lichtwellenleiter sind z. B. solche mit einer Erbium-Dotierung bei den üblichen eingesetzten Licht-Signalwellen im Wellenlängenbereich um 1550 nm, die mit Pumplichtwellen von 980 nm und/oder 1480 nm betrieben werden können. Hierzu ist es bekannt, eine z. B. durch eine Laserdiode erzeugte Pumplichtwelle zusammen mit der zu verstärkenden Signalwelle in einen solchen verstärkungsaktiven Lichtwellenleiter einzukoppeln.

Dies erfolgt z. B. durch faseroptische Elemente, mit denen die zunächst jeweils in separaten Einkern-Lichtwellenleitern propagierenden Wellen auf den Kern eines sodann gemeinsamen verstärkungsaktiven Einkern-Lichtwellenleiters übertragen werden können. Solche Elemente können als sogenannte Schmelzkoppler ausgebildet sein oder als mikrooptische Freistrahl-Anordnungen. Mit diesen Elementen kann schon bei geringen Pumpleistungen eine laseraktive Besetzungsinversion erzielt werden.

Zum Zweck der Verstärkung von Signalwellen in Mehrkern-Lichtwellenleitern bestehen keine etablierten Techniken. Hier besteht das signifikante Problem, eine z. B. genügende Besetzungsinversion bei laseraktiven Lichtwellenleitern durch optisches Pumpen zu erzielen, die vom Prinzip der Pumpwellenführung in der Mehrkernfaser abhängt.

Vorgeschlagen wurde ein Prinzip, bei dem eine Pumpwelle in einen inneren verstärkungsaktiven Mantel eines Doppel-Mantel (double-cladding) - Mehrkern-Lichtwellenleiters eingekoppelt wird. Bei diesem Prinzip werden jedoch erheblich höhere Pumpleistungen pro Kern benötigt, als bei der Verstärkung in einem Einkern-Lichtwellenleiter. Eine genügende Besetzungsinversion wäre hingegen erzielbar, wenn z. B. in jeden der Kerne eines Mehrkern-Lichtwellenleiters eine Pumpwelle einkoppelbar wäre und dieser jeweilige Kern verstärkungsaktiv wäre, also z. B. Laser- oder Raman-aktiv wäre. Techniken zur Einkopplung von Pumpwellen in jeden einzelnen Kern eines Mehrkern-Lichtwellenleiters existieren jedoch bislang nicht.

Ein Verstärkungsverfahren nach dem Stand der Technik ist aus US-A-2011/032604 bekannt.

Es ist daher die Aufgabe der Erfindung ein Verfahren und eine Vorrichtung bereit zu stellen, mit denen mit hoher Effizienz eine Verstärkung erzielt werden kann von in Mehrkern-Lichtwellenleitern propagierenden Signalwellen. Insbesondere ist es auch eine Aufgabe der Erfindung, eine Möglichkeit zu erschließen, Pumpwellen in jeden Kern eines verstärkungsaktiven Mehrkern-Lichtwellenleiters einzukoppeln, in welchem jeweils die Kerne verstärkungsaktiv ausgebildet sind, da sich hierdurch mit Einkern-Lichtwellenleitern vergleichbare Verstärkungsbedingungen ergeben würden.

Nach dem erfindungsgemäßen Verfahren wird diese Aufgabe dadurch gelöst, dass bei dem eingangs genannten gattungsgemäßen Verfahren eine erste optische Feldtransformation durchgeführt wird, bei welcher jede Signalwelle aus einem jeweiligen Kern des ersten Mehrkern-Lichtwellenleiters ausgekoppelt wird und der räumliche Abstand der Signalwellen verschiedener Kerne zueinander gegenüber dem vorgegebenen Kernabstand des ersten Mehrkern-Lichtwellenleiters vergrößert wird und eine zweite, insbesondere zur ersten inverse optische Feldtransformation durchgeführt wird, bei welcher der räumliche, vergrößerte Abstand der Signalwellen verschiedener Kerne auf einen vorgegebenen Kernabstand eines zweiten Mehrkern-Lichtwellenleiters reduziert und jede Signalwelle in den korrespondierenden Kerndieses zweiten Mehrkern-Lichtwellenleiters eingekoppelt wird, wobei zwischen der ersten und der zweiten optischen Feldtransformation jede Signalwelle eines jeden Kerns mit einer individuell für jeden Kern zugeführten Pumpwelle koaxial überlagert wird.

Mit einer erfindungsgemäßen Vorrichtung wird die Aufgabe analog dadurch gelöst, dass die Vorrichtung ein erstes feldtransformierendes optisches Element umfasst, mit welchem jede Signalwelle aus einem jeweiligen Kern des ersten Mehrkern-Lichtwellenleiters auskoppelbar ist und mit dem der räumliche Abstand der Signalwellen verschiedener Kerne zueinander gegenüber dem vorgegebenen Kernabstand des ersten Mehrkern-Lichtwellenleiters vergrößerbar ist und ein zweites feldtransformierendes optisches Element umfasst, insbesondere das zum ersten invers arbeitet, mit welchem der räumliche, vergrößerte Abstand der Signalwellen verschiedener Kerne auf einen vorgegebenen Kernabstand eines zweiten Mehrkern-Lichtwellenleiters reduzierbar ist und mit dem jede Signalwelle in den korrespondierenden Kern dieses zweiten Mehrkern-Lichtwellenleiters einkoppelbar ist, wobei zwischen dem ersten und dem zweiten feldtransformierenden optischen Element jede Signalwelle eines jeden Kerns mit einer individuell für jeden Kern zugeführten Pumpwelle koaxial überlagert ist.

Unter korrespondierenden Kernen des ersten und zweiten Mehrkern-Lichtwellenleiters wird dabei verstanden, dass jedem Kern des ersten Mehrkern-Lichtwellenleiters genau ein Kern des zweiten Mehrkern-Lichtwellenleiters zugeordnet ist somit also die Signalwellen zwischen korrespondierenden Kernen übertragen werden.

Der wesentliche Kerngedanke der Erfindung liegt darin, dass bei Mehrkern-Lichtwellenleitern der Abstand zwischen den jeweiligen Kernen und somit auch zwischen den jeweiligen Signalwellen verschiedener Kerne bei nur wenigen Mikrometern (z. B. 20 Mikrometern) liegt und gemäß der Erfindung dieser Abstand zwischen den Signalwellen vergrößert wird gegenüber dem Kernabstand im Mehrkern-Lichtwellenleiter, so dass diese Signalwellen aufgrund der größeren Abstände zueinander einfacher gehandhabt werden können und bei diesem vergrößerten Abstand die Signalwellen jedes einzelnen Kerns auf vergleichsweise einfache Art mit einer für jeden Kern individuell zugeführten Pumpwelle überlagert werden können.

Zwischen der ersten und der zweiten eingangs genannten Transformation gibt es somit gemäß der Erfindung einen Ausbreitungsbereich, in welchem die Signalwellen der verschiedenen Kerne sich in einem größeren Abstand zueinander ausbreiten, als dies innerhalb eines Mehrkern-Lichtwellenleiters der Fall ist. Vor und hinter diesem Ausbreitungsbereich sind die Signalwellen jedoch jeweils in einem Mehrkern-Lichtwellenleiter geführt, insbesondere in Mehrkern-Lichtwellenleitern, die zueinander identisch sind.

Der genannte Ausbreitungsbereich mit vergrößertem Abstand zwischen den Signalwellen kann dabei innerhalb von mehreren Lichtwellenleitern realisiert sein, insbesondere innerhalb von mehreren Einkern-Lichtwellenleitern, deren Anzahl der Anzahl der Kerne des ersten und/oder zweiten Mehrkern-Lichtwellenleiters entspricht oder aber auch als ein Bereich freier Propagation in Luft oder einem vorgegebenen vorzugsweise gasförmigen Medium, wobei bei einer Freistrahl-Propagation der Signalwellen diese sich bevorzugt parallel zueinander ausbreiten, insbesondere in einer geometrischen Anordnung zueinander, die zur geometrischen Anordnung der Kerne des ersten und/oder zweiten Mehrkern-Lichtwellenleiters korrespondiert.

Der Abstand zwischen den Signalwellen der verschiedenen Kerne des ersten Mehrkern-Lichtwellenleiters kann in dem genannten Ausbreitungsbereich zwischen der ersten und der zweiten Feldtransformation grundsätzlich beliebig sein, sofern er nur größer ist als der Abstand der Kerne dieses Mehrkern-Lichtwellenleiters.

Bevorzugt kann ein Abstand gewählt werden, der sich bei einer Propagation der Signalwellen in Einkern-Lichtwellenleitern ergibt, wenn diese Einkern-Lichtwellenleiter in dergleichen geometrischen Konfiguration aneinander angeordnet werden, die der geometrischen Konfiguration der mehreren Kerne des ersten und/oder zweiten Mehrkern-Lichtwellenleiters entspricht. Der Abstand zueinander kann sodann im Wesentlichen durch den äußeren Durchmesser eines jeweiligen Einkern-Lichtwellenleiters gegeben sein.

Alternativ kann der Abstand durch den Durchmesser abbildender optischer Elemente wie beispielsweise Gradientenindexlinsen gegeben sein oder durch die erforderlichen Strahldurchmesser für eine parallele Strahlführung über eine gewünschte Distanz ohne einen spürbaren Einfluss von Beugungseffekten bzw. ohne eine unerwünschte Strahlaufweitung.

Bei der Überlagerung jeder Signalwelle eines Kerns des ersten Mehrkern-Lichtwellenleiters mit einer dem betreffenden Kern zugeordneten Pumpwelle innerhalb des vorgenannten Ausbreitungsbereiches mit vergrößerten Abständen der Signalwellen zueinander kann diese Überlagerung derart erfolgen, dass die jeweilige Pumpwelle in der selben Richtung propagiert wie die Signalwelle, also parallel oder in der entgegengesetzten Richtung, also antiparallel.

Bei beiden Ausführungen kann es vorgesehen sein, dass eine Verstärkung der jeweiligen Signalwelle bereits innerhalb des genannten Ausbreitungsbereichs erfolgt, z. B. wenn in diesem Ausbreitungsbereich zwischen erster und zweiter Transformation bereits wenigstens ein Verstärkungsmedium angeordnet ist, dass von Signalwelle und Pumpwelle durchlaufen wird und hierbei von der Pumpwelle optisch gepumpt wird.

Es kann auch vorgesehen sein, dass bei einer koaxialen parallelen Überlagerung zwischen Signal- und Pumpwelle der zweite Mehrkern-Lichtwellenleiter oder ein diesem nachfolgender Mehrkern-Lichtwellenleiter als optisch gepumpter Mehrkern-Lichtwellenleiter mit verstärkungsaktiven Kernen ausgebildet wird, insbesondere mit laseraktiven Erbium-dotierten Kernen oder auch mit Raman-aktiven Kernen.

Hierbei wirkt die zweite Feldtransformation aufgrund der Koaxialität zwischen Signalwelle und Pumpwelle sowohl auf die jeweilige Signalwelle als auch auf die jeweils überlagerte Pumpwelle, so dass durch diese zweite Feldtransformation bei der parallelen Propagation eine jeweilige Signalwelle zusammen mit den überlagerten Pumpwelle in den zugeordneten Kern des zweiten Mehrkern-Lichtwellenleiters eingekoppelt werden.

Bei dieser Ausführung führt sodann der zweite Mehrkern-Lichtwellenleiter in jedem seiner Kerne wenigstens eine Signalwelle und wenigstens eine Pumpwelle. Es kann sodann dieser zweite Mehrkern-Lichtwellenleiter oder ein in Propagationsrichtung nachfolgender Mehrkern-Lichtwellenleiter verstärkungsaktive Kerne aufweisen, die jeweils durch die jeweilige Pumpwelle optisch gepumpt werden und so die jeweils durchlaufende Signalwelle verstärken.

Bei einer demgegenüber koaxialen antiparallelen Überlagerung kann es auch vorgesehen sein, dass der erste Mehrkern-Lichtwellenleiter oder ein diesem in Propagationsrichtung vorgeordneter Mehrkern-Lichtwellenleiter als optisch gepumpter Mehrkern-Lichtwellenleiter mit verstärkungsaktiven Kernen ausgebildet wird, insbesondere mit Raman-aktiven Kernen oder mit Erbium-dotierten laseraktiven Kernen ausgebildet wird.

Bei einer solchen Anordnung läuft demnach die jeweils einem Kern des ersten Mehrkern-Lichtwellenleiters zugeordnete Pumpwelle der wenigstens einen Signalwelle des jeweiligen Kerns entgegen, so dass die auf eine Signalwelle wirkende erste Feldtransformation auf die Pumpwelle invers wirkt und hierdurch die Pumpwelle an der Stelle in den jeweiligen zugeordneten Kern des Mehrkern-Lichtwellenleiters einkoppelt, an welcher die Signalwelle ausgekoppelt wird.

Somit laufen im ersten Mehrkern-Lichtwellenleiter in jedem Kern die wenigstens eine Signalwelle und die eingekoppelte Pumpwelle gegeneinander und es kann eine Verstärkung im ersten Mehrkern-Lichtwellenleiter durchgeführt werden, wenn dieser verstärkungsaktive Kerne aufweist oder in einen in Propagationsrichtung vorgeordneten zur Verstärkung vorgesehenen Mehrkern-Lichtwellenleiter. Bei dieser Ausführung wird sodann in dem zweiten Mehrkern-Lichtwellenleiter, der nach der zweiten Feldtransformation in Propagationsrichtung folgt nur die jeweils bereits verstärkte Signalwelle eingekoppelt, nicht jedoch die Pumpwelle.

Unabhängig von den vorbeschriebenen Verstärkungsprinzipien und den damit verbundenen Führungen der Pumpwellen kann es in allen Ausführungen vorgesehen sein, dass bei der ersten Feldtransformation jede Signalwelle eines jeweiligen Kerns des ersten Mehrkern-Lichtwellenleiters überführt wird in jeweils einen einzelnen dem jeweiligen Kern zugeordneten Einkern-Lichtwellenleiter, insbesondere wobei die geometrische Anordnung der einzelnen Einkern-Lichtwellenleiter zueinander zu der geometrischen Anordnung der Kerne des ersten Mehrkern-Lichtwellenleiters, insbesondere bis auf eine Abstandsskalierung, korrespondiert und bei der zweiten Feldtransformation jede in einem Einkern-Lichtwellenleiter propagierende Signalwelle aus dem Einkern-Lichtwellenleiter überführt wird in einen zugeordneten Kern des zweiten Mehrkern-Lichtwellenleiters, insbesondere wobei die geometrische Anordnung der Einkern-Lichtwellenleiter zueinander zu der geometrischen Anordnung der Kerne des zweiten Mehrkern-Lichtwellenleiters korrespondiert. Besonders bevorzugt sind hierbei die ersten und zweiten Mehrkern-Lichtwellenleiter identisch zueinander aufgebaut, insbesondere hinsichtlich Kernabstände, Kerndurchmesser, Mantel etc.

Um die vorgenannte erste und/oder zweite Feldtransformation durchzuführen kann es vorgesehen sein, ein feldtransformierendes optisches Element einzusetzen, dass z. B. ausgebildet ist als Übergangs-Lichtwellenleiter, bei dem ein Ende einem Mehrkern-Lichtwellenleiter entspricht und das anderen Ende mehreren Einkern-Lichtwellenleitern entspricht, wobei jeder Einkern-Lichtwellenleiter genau einem Kern des Mehrkern-Lichtwellenleiters zugeordnet ist und die geometrische Anordnung der mehreren Einkern-Lichtwellenleiter derjenigen geometrischen Anordnung der mehreren Kerne des Mehrkern-Lichtwellenleiters entspricht. Mit einem solchen optischen Element kann je nach Propagationsrichtung die erste oder zweite Feldtransformation durchgeführt werden, so dass für den Zweck dieser Feldtransformationen zueinander identische optische Elemente eingesetzt werden können.

Es ergibt sich der weitere Vorteil, dass der Abstand der Kerne der Einkern-Lichtwellenleiter-Enden bei einem solchen optischen, insbesondere faseroptischen Element mindestens dem Durchmesser eines jeweiligen Einkern-Lichtwellenleiters an diesem Ende entspricht, so dass hierdurch die gewünschte Abstandsänderung zwischen den Signalwellen der verschiedenen Kerne des Mehrkern-Lichtwellenleiters in beide Richtung in idealer Weise erfolgen kann.

Ein weiterer Vorteil ergibt sich, wenn die Handhabung der Signalwellen, insbesondere die Überlagerung mit Pumpwellen in dem genannten Ausbreitungsbereich zwischen erster und zweiter Feldtransformation innerhalb von Lichtwellenleitern erfolgen soll, da bei Einsatz dieser genannten optischen Elemente, die auch als Übergangsfasern oder Übergangslichtwellenleiter bezeichnet werden können, die jeweiligen Signalwellen bereits in Einkern-Lichtwellenleitern geführt sind, die an einem der beiden Enden eines solchen Elementes ausgebildet sind.

Für die Handhabung der Signalwellen, insbesondere deren Überlagerung mit Pumpwellen bei einer Freifeldpropagation sind die Signalwellen nach der ersten Feldtransformation aus einem diese Transformation durchführenden optischen Element auszukoppeln und dabei jeweils bevorzugt zu parallelisieren und vor der zweiten Feldtransformation in das diese zweite Transformation durchführende Element jeweils einzukoppeln.

Bei einer weiteren Handhabung der Signalwellen innerhalb des vorgenannten Ausbreitungsbereiches zwischen den Feldtransformationen in Lichtwellenleitern kann erfindungsgemäß zwischen erster und zweiter Feldtransformation jede Signalwelle eines Einkern-Lichtwellenleiters in einem Einkern-Lichtwellenleiter mit einer Pumpwelle überlagert werden, die mit einem Einkern-Lichtwellenleiter zugeführt wird. Eine solche Überlagerung kann z. B. mittels eines sogenannten jeweiligen Schmelzkopplers oder eines jeweiligen mikrooptischen Freistrahlkopplers erfolgen, auch hierbei können Pumpwellen und Signalwellen parallel oder antiparallel überlagert werden.

Es kann sodann z. B. unmittelbar in dem Ausbreitungsbereich zwischen den beiden Transformationen innerhalb desjenigen Einkern-Lichtwellenleiters in dem Signalwelle und Pumpwelle überlagert sind die Verstärkung stattfinden, wenn der Kern dieses Einkern-Lichtwellenleiters bereits verstärkungsaktiv ausgebildet ist. Ist dies hingegen nicht der Fall, so erfolgt die Verstärkung erst im zweiten oder je nach Propagationsrichtung der Pumpwellen im ersten Mehrkern-Lichtwellenleiter, wie es zuvor beschrieben wurde, nachdem die jeweilige Pumpwelle entweder mit der zweiten Transformation oder der inversen ersten in einen jeweiligen Kern des Mehrkern-Lichtwellenleiters eingekoppelt wurde.

Bei der alternativen Freifeldausbreitung der Signalwellen im Ausbreitungsbereich zwischen erster und zweiter Feldtransformation kann es bevorzugt vorgesehen sein, eine jeweilige Signalwelle aus einem jeweiligen Kern des ersten Mehrkern-Lichtwellenleiters mittels eines Strahl-kombinierenden optischen Elementes mit der jeweils dem betreffenden Kern zugeordneten Pumpwelle parallel oder antiparallel zu überlagern. Hierfür kann z. B. ein dichroitischer Spiegel eingesetzt werden oder auch ein sogenannter Strahlteilerwürfel.

Ein dichroitischer Spiegel kann z.B. derart eingesetzt werden, dass dieser für alle Signalwellen transmittierend wirkt und für die jeweiligen Pumpwellen reflektiv, so dass die Pumpwellen durch optische Reflektion an der Spiegeloberfläche in den Strahlengang der Signalwellen eingekoppelt werden können und dabei jeweils koaxial zur Signalwelle propagieren. Alternativ kann der dichroitische Spiegel die Signalwellen reflektieren und die Pumpwellen in Transmission durchlassen. Die Auswahl, welche Art der Wellen in Reflektion mit den anderen Wellen überlagert wird kann z.B. in Abhängigkeit der Einfügedämpfung erfolgen, welche die Wellen bei der Transmission durch das Strahl-kombinierende Element erfahren.

Hierfür ist es bevorzugt vorgesehen, nach der ersten Feldtransformation jede Signalwelle jedes Einkern-Lichtwellenleiters, der durch eines der Enden des vorgenannten optischen Elementes gebildet ist, aus dem Einkern-Lichtwellenleiter auszukoppeln und dabei zu parallelisieren und nach durchlaufen der genannten Ausbreitungsstrecke vor der zweiten Feldtransformation jede parallelisierte Signalwelle in einen zugeordneten Einkern-Lichtwellenleiter an einem der Enden des anderen optischen Elementes, das die zweite Transformation bewirkt, wieder einzukoppeln.

Zum Zweck der Auskopplung und Parallelisierung sowie zur Einkopplung der parallelisierten Signalwellen kann jeweils eine Linse, insbesondere Gradientenlinse zum Einsatz kommen. Die Anzahl der eingesetzten Linsen entspricht somit der Anzahl der Kerne des ersten und/oder zweiten Mehrkern-Lichtwellenleiters, wobei die Anordnung der Linsen untereinander ebenfalls zur Geometrie der Kerne des ersten/zweiten Mehrkern-Lichtwellenleiters korrespondiert.

Vorteilhaft wird eine der Kernanzahl des ersten Mehrkern-Lichtwellenleiters entsprechende Anzahl von Pumpwellen mittels je eines Einkern-Lichtwellenleiters zur Verfügung gestellt, wobei die Geometrie der Einkern-Lichtwellenleiter der Pumpwellen zu der Geometrie der Einkern-Lichtwellenleiter der Signalwellen identisch ist.

Aus diesen Einkern-Lichtwellenleitern werden die Pumpwellen jeweils durch die gleiche Linsenanordnung ausgekoppelt und parallelisiert, wie Sie auch bei der Ein-/Auskopplung der Signalwellen verwendet wird, so dass die mehreren Pumpwellen parallel zueinander und in der gleichen geometrischen Anordnung zueinander, insbesondere in hexagonaler Anordnung parallel zueinander verlaufen, wie die Signalwellen. Die mehreren Pumpwellen können daher aufgrund ihrer definierten und festen Anordnung zueinander mit Justageelementen (Spiegeln etc.) wie ein einziger Strahl justiert werden.

Dabei kann es in eiern Ausführung vorgesehen sein, dass jede Pumpwelle, die mit einem separaten Einkern-Lichtwellenleiter zur Überlagerung zugeführt wird mit einer separaten Pumplichtquelle, z.B. einer Laserdiode erzeugt wird. Erzeugt eine Pumplichtquelle eine höhere Pumpleistung, als sie für eine einzige Pumpwelle benötigt wird, so kann es auch vorgesehen sein, das von einer Pumplichtquelle insgesamt erzeigt Licht in mehrere, zumindest wenigstens zwei Pumplichtwellen aufzuspalten. Z.B. kann dies mit faseroptischen Elementen erfolgen. So können auf diese Weise z.B. die Pumpwellen von wenigstens zwei Einkern-Lichtwellenleitern durch eine gemeinsame Pumplichtquelle erzeugt werden. Ist die Ausgangsleistung genügend hoch, so können ggfs. alle Pumplichtwellen der zur Zuführung eingesetzten Einkern-Lichtwellenleiter durch eine einzige gemeinsame Pumplichtquelle erzeugt werden.

Weiterhin kann es vorgesehen sein, innerhalb der Strecke freier Propagation zwischen erster und zweiter Feldtransformation zusätzlich zu dem strahlkombinierenden optischen Element wenigstens ein weiteres optisches Element einzusetzen, wie z.B. einen optischen Isolator, Ein- und/oder Auskoppelelemente zur Strahlkontrolle / -überwachung, eine Vorrichtung zur Leistungsmessung von Signal- und/oder Pumpwellen etc.

Ausführungsbeispiele der Erfindung sind in den nachfolgenden Figuren dargestellt. Es zeigen:
- Figur 1:: eine parallele Überlagerung von Signal- und Pumpwellen bei Freifeldpropagation;
- Figur 2:: eine antiparallele Überlagerung von Signal- und Pumpwellen bei Freifeldpropagation;
- Figur 3:: die Überlagerung von Pump- und Signalwelle in einem Einkern-Lichtwellenleiter;

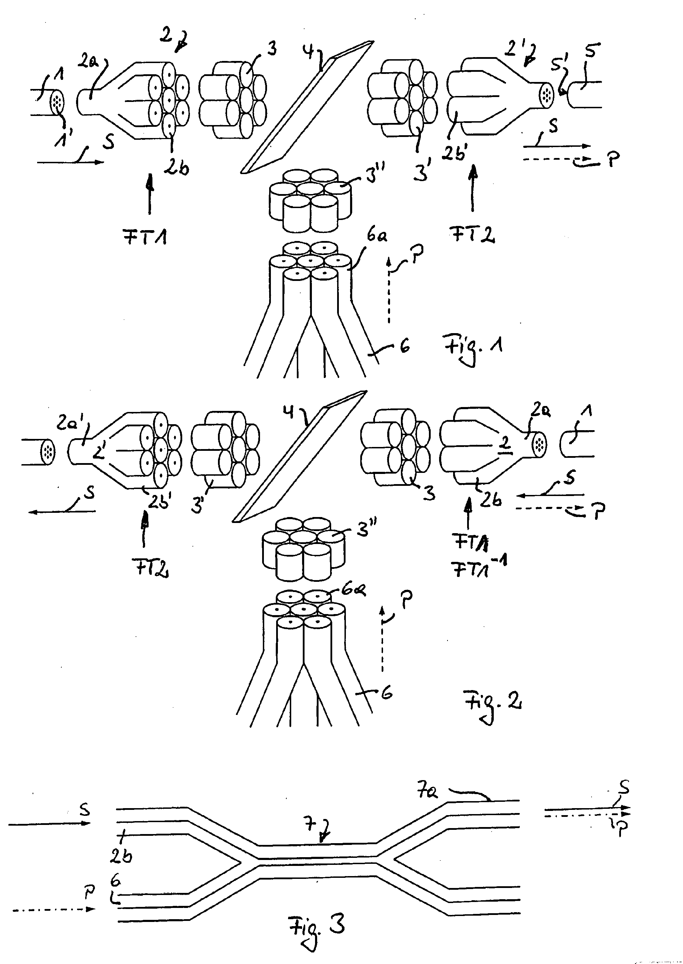

Die Figur 1 zeigt eine mögliche Ausführungsform der Erfindung, bei der in einem ersten Mehrkern-Lichtwellenleiter 1 beispielhaft und ohne Beschränkung der Erfindung sieben einzelne Kerne 1' in hexagonaler Geometrie zueinander angeordnet sind, die jeweils wenigstens eine Signalwelle führen. Ggfs. können durch Wellenlängenmultiplexing mehrere Signalwellen mit verschiedenen Wellenlängen in jedem der Kerne 1' überlagert sein. In dieser Figur 1 ist die Propagationsrichtung der Signalwellen von links nach rechts, wie durch den Pfeil S angedeutet.

Mit einem Übergangslichtwellenleiter 2 wird die erste zuvor beschriebene Feldtransformation FT1 durchgeführt. Hierfür weist der Übergangslichtwellenleiter 2 ein Ende 2a auf, das dem ersten Mehrkern-Lichtwellenleiter 1 hinsichtlich Anzahl und Geometrie der Kerne 1'entspricht. Dieses Ende 2a kann somit direkt an den Mehrkern-Lichtwellenleiter 1 angekoppelt sein. Der Übergangslichtwellenleiter 2 weist ein zweites Ende auf, dass mehrere Einkern-Lichtwellenleiter 2b umfasst, deren Anzahl der Anzahl der mehreren Kerne 1'des Mehrkern-Lichtwellenleiters 1 entspricht, die jeweils einem einzigen Kern 1'zugeordnet sind und die in ihrer geometrischen Anordnung zueinander zu derjenigen Anordnung der Kerne 1' korrespondieren.

Mit dem Übergangslichtwellenleiter 2 werden demnach die Signalwellen in einem jeweiligen Kern 1' in genau einen der Einkern-Lichtwellenleiter 2b überführt, so dann an dieser Stelle die jeweiligen Signalwellen der verschiedenen Kerne 1' einen größeren Abstand zueinander haben als im Mehrkern-Lichtwellenleiter 1 und somit einfacher gehandhabt werden können, sei es durch weitere Führung in Lichtwellenleitern oder wie hier in der Figur 1 gezeigt durch Propagation im Freifeld.

Zur Auskopplung der Signalwellen aus den Einkern-Lichtwellenleitern 2b folgt auf diese jeweils eine Gradientenlinse 3, wobei die einzelnen Gradientenlinsen 3 eine geometrische Anordnung bilden, die wiederum derjenigen der Einkern-Lichtwellenleiter 2b entspricht. In Propagationsrichtung sind somit nach dem Linsenfeld der Linsen 3 parallele Signalwellen ausgebildet, die einen dichroitischen Spiegel 4 durchlaufen und danach durch ein z. B. identisches Linsenfeld aus Linsen 3' in ein Übergangslichtwellenleiter 2' eingekoppelt werden der z. B. identisch zu dem Übergangslichtwellenleiter 2 ist, nur in umgekehrter Richtung durchlaufen wird und die zweite Feldtransformation FT2 durchführt, die somit zur ersten invers sein kann und die Signalwellen wiederum in die jeweiligen Kerne 5' eines zweiten Mehrkern-Lichtwellenleiters 5 überführt.

Pumpwellen werden hier in der Figur 1 durch separate Einkern-Lichtwellenleiter 6 zugeführt, wobei die Anzahl der Einkern-Lichtwellenleiter 6 und somit der Pumpwellen der Anzahl der Kerne des ersten und/oder zweiten Mehrkern-Lichtwellenleiters 1 bzw. 5 entspricht. Jede Pumpwelle ist exakt einem Kern 1' bzw. 5'zugeordnet. Die Geometrie der Einkern-Lichtwellenleiter 6 wird zumindest an deren Auskoppelende 6a an die Geometrie der Enden 2b und 2b'der Übergangslichtwellenleiter 2 und 2' angepasst. Durch die Auskopplung der Pumpwellen aus den Enden 6a mittels Linsen 3", insbesondere Gradientenlinsen 3", deren geometrische Anordnung zueinander derjenigen der Linsenfelder 3 und 3' entspricht, werden die Pumpwellen parallelisiert und mit dem dichroitischen Spiegel 4 reflektiv mit den Signalwellen koaxial überlagert. In der hier gezeigten Anordnung propagierten sodann sowohl die Signalwellen S als auch die Pumpwellen P nach rechts und werden demnach gemeinsam durch die zweite Feldtransformation FT2 in die Kerne 5' des Mehrkern-Lichtwellenleiters 5 eingekoppelt. Hier kann sodann die Verstärkung der Signalwellen stattfinden, insbesondere wenn die Kerne 5' verstärkungsaktiv sind, beispielsweise Erbiumdotiert sind und mit Pumpwellen der Wellenlänge von 980 nm oder 1480 nm gepumpt werden, wenn die Signalwellen im Wellenlängenbereich um 1550 nm gewählt sind.

Die Pumpwellen, die in jeweiligen Einkern-Lichtwellenleitern 6 zugeführt werden, können z. B. jeweils durch einen eigenen Laser, z. B. durch eine Laserdiode, bereit gestellt werden oder auch durch Aufspaltung der Laserstrahlung einer Quelle, je nachdem ob eine oder mehrere Laserlichtquellen die benötigte Gesamtleistung bereit stellen können.

Die Figur 2 unterscheidet sich von der Figur 1 lediglich in der Richtung der Signalwellenausbreitung S und somit der Anordnung des ersten und zweiten Mehrkern-Lichtwellenleiters 1 bzw. 5 auf jeweils anderer Seite gegenüber Figur 1. Ansonsten entsprich die Beschreibung exakt derjenigen der Figur 1.

Wegen der umgekehrten Richtung der Signalwellen jedoch derselben Orientierung des dichroitischen Spiegels 4 wirkt auf die Pumpwellen nach der Überlagerung auf die Signalwellen die inverse erste Feldtransformation FT¹ so dass diese in den ersten Mehrkern-Lichtwellenleiter 1 eingekoppelt werden und darin den Signalwellen entgegenlaufen. Daher ist in dieser Ausführung jeder Kern des ersten Mehrkern-Lichtwellenleiters verstärkungsaktiv ausgebildet. Die antiparallele Propagation kann insbesondere bei Raman-aktiven Verstärkern vorteilhaft sein.

Die Figur 3 stellt eine alternative Ausbreitung der Signalwellen und Überlagerung mit Pumpwellen im Ausbreitungsbereich zwischen der ersten und zweiten Feldtransformation dar.

Nach der ersten Feldtransformation FT1, z. B. wie in Figuren 1 und 2 dargestellt, liegen die Signalwellen der verschiedenen Kerne 1' in separaten Einkern-Lichtwellenleitern 2b vor. Die Pumpwellen werden z. B. wie in Figur 1 oder 2 gezeigt durch Einkern-Lichtwellenleiter 6 zugeführt.

Es folgt jedoch nun für jede Paarung aus Signalwelle und Pumpwelle keine Freifeldausbreitung, sondern eine Überlagerung dieser Wellen in einem sogenannten Schmelzkoppler 7, an dessen Ende 7a sowohl die Signalwelle auch die Pumpwelle sich parallel zueinander in einem Einkern-Lichtwellenleiter 7a ausbreiten. Dieser Einkern-Lichtwellenleiter kann sodann an einen der Eingänge 2b' eines Übergangslichtwellenleiter 2' angeschlossen werden, der die zweite Feldtransformation durchführt. Alle überlagerten Paare aus Signalewelle und Pumpwelle werden so in den zweiten Mehrkern-Lichtwellenleiter 5 überführt.

Die Figur 3 stellt somit die Strahlführung und Überlagerung für nur eine Pumpwelle und eine Signalwelle aus einem der Kerne 1' als Alternative zur Freifeldpropagation zwischen erster und zweiter Feldtransformation dar und entsprich ansonsten hinsichtlich der Strahlführung und Verstärkung der Figur 1 Auch bei der Figur 3 kann die Überlagerung von Pumpwelle und jeder Signalwelle antiparallel erfolgen.

Statt den hier gezeigten Übergangslichtwellenleitern 2 und 2' können auch holografische Elemente zum Einsatz kommen, deren holografische Information die erste und/oder zweite Feldtransformation verkörpert. Hier besteht auch die Möglichkeit in einem holografischen Element die Wirkung der Linsen 3 bzw. 3' mit zu integrieren.

## Patentansprüche

1. Verfahren zur Verstärkung optischer, in einem ersten Mehrkern-Lichtwellenleiter (1) geführter Signalwellen, bei dem der erste Mehrkern-Lichtwellenleiter (1) mehrere Kerne (1') mit einem vorgegebenen Kernabstand und einer vorgegebenen Geometrie der Kerne (1') zueinander umfasst und in jedem Kern (1') wenigstens ein Signalwellenmodus ausbreitungsfähig ist und wobei jede Signalwelle in einem optisch gepumpten verstärkungsaktiven Lichtwellenleiter verstärkt wird, wobei eine erste optische Feldtransformation (FT1) durchgeführt wird, bei welcher jede Signalwelle aus einem jeweiligen Kern (1') des ersten Mehrkern-Lichtwellenleiters(1) ausgekoppelt wird und der räumliche Abstand der Signalwellen verschiedener Kerne (1') zueinander gegenüber dem vorgegebenen Kernabstand des ersten Mehrkern-Lichtwellenleiters (1) vergrößert wird und eine zweite, insbesondere zur ersten inverse optische Feldtransformation (FT2) durchgeführt wird, bei welcher der räumliche, vergrößerte Abstand der Signalwellen verschiedener Kerne (1') auf einen vorgegebenen Kernabstand eines zweiten Mehrkern-Lichtwellenleiters (5) reduziert und jede Signalwelle in den korrespondierenden Kern (5') dieses zweiten Mehrkern-Lichtwellenleiters (5) eingekoppelt wird, wobei zwischen der ersten und der zweiten optischen Feldtransformation (FT1, FT2) jede Signalwelle eines jeden Kerns (1') mit einer individuell für jeden Kern (1') zugeführten Pumpwelle koaxial überlagert wird.

2. Verfahren nach Anspruch 1, **dadurch gekennzeichnet, dass** bei einer koaxialen parallelen Überlagerung zwischen Signal- und Pumpwelle der zweite Mehrkern-Lichtwellenleiter (5) oder ein diesem nachfolgender Mehrkern-Lichtwellenleiter als optisch gepumpter Mehrkern-Lichtwellenleiter mit verstärkungsaktiven Kernen (5') ausgebildet wird, insbesondere mit laseraktiven Erbium-dotierten Kernen oder mit Raman-aktiven Kernen oder bei einer koaxialen antiparallelen Überlagerung der erste Mehrkern-Lichtwellenleiter (1) oder ein diesem vorgeordneter Mehrkern-Lichtwellenleiter als optisch gepumpter Mehrkern-Lichtwellenleiter mit verstärkungsaktiven Kernen ausgebildet wird, insbesondere mit Raman-aktiven Kernen oder mit laseraktiven Erbium-dotierten Kernen ausgebildet wird.

3. Verfahren nach einem der vorherigen Ansprüche, **dadurch gekennzeichnet, dass** bei der ersten Feldtransformation (FT1) jede Signalwelle eines jeweiligen Kerns (1') des ersten Mehrkern-Lichtwellenleiters (1) überführt wird in jeweils einen einzelnen dem jeweiligen Kern (1') zugeordneten Einkern-Lichtwellenleiter (2b), insbesondere wobei die geometrische Anordnung der einzelnen Einkern-Lichtwellenleiter (2b) zueinander zu der geometrischen Anordnung der Kerne (1') des ersten Mehrkern-Lichtwellenleiters (1) korrespondiert und bei der zweiten Feldtransformation (FT2) jede in einem Einkern-Lichtwellenleiter (2b') propagierende Signalwelle aus dem Einkern-Lichtwellenleiter (2b') überführt wird in einen zugeordneten Kern (5') des zweiten Mehrkern-Lichtwellenleiters (5), insbesondere wobei die geometrische Anordnung der Einkern-Lichtwellenleiter (2b') zueinander zu der geometrischen Anordnung der Kerne (5') des zweiten Mehrkern-Lichtwellenleiters (5) korrespondiert.

4. Verfahren nach Anspruch 3, **dadurch gekennzeichnet, dass** zwischen erster und zweiter Feldtransformation (FT1, FT2) jede Signalwelle eines Einkern-Lichtwellenleiters (2b) in einem Einkern-Lichtwellenleiter (7a) mit einer Pumpwelle überlagert wird, die mit einem Einkern-Lichtwellenleiter (6) zugeführt wird, insbesondere mittels eines jeweiligen Schmelzkopplers (7) oder eines jeweiligen mikrooptischen Freistrahlkopplers.

5. Verfahren nach Anspruch 3, **dadurch gekennzeichnet, dass** zwischen erster und zweiter Feldtransformation(FT1, FT2) jede Signalwelle eines jeden Einkern-Lichtwellenleiters (2b) bei einer Freifeldausbreitung mit einer sich im Freifeld ausbreitenden Pumpwelle koaxial überlagert wird, insbesondere mittels eines dichroitischen Spiegels (4), wobei nach der ersten Feldtransformation (FT1) jede Signalwelle jedes Einkern-Lichtwellenleiters (2b) aus dem Einkern-Lichtwellenleiter (2b) ausgekoppelt und parallelisiert wird und vor der zweiten Feldtransformation (FT2) jede parallelisierte Signalwelle in einen zugeordneten Einkern-Lichtwellenleiter (2b') eingekoppelt wird.

6. Verfahren nach Anspruch 5, **dadurch gekennzeichnet, dass** eine der Kernanzahl des ersten Mehrkern-Lichtwellenleiters (1) entsprechende Anzahl von Pumpwellen mittels je eines Einkern-Lichtwellenleiters (6) zur Verfügung gestellt wird, wobei die Geometrie der Einkern-Lichtwellenleiter (2b, 6) von Signalwellen und Pumpwellen identisch ist.

7. Verfahren nach Anspruch 5 oder 6, **dadurch gekennzeichnet, dass** die Pumpwellen durch Reflektion an einem von den Signalwellen in Transmission durchlaufenen optischen Element, insbesondere einem dichroitischen Spiegel mit den Signalwellen überlagert werden oder die Signalwellen in Reflektion an einem von den Pumpwellen in Transmission durchlaufenen optischen Element mit den Pumpwellen überlagert werden, insbesondere in Abhängigkeit der Einfügedämpfung der transmittierten Wellen am optischen Element..

8. Vorrichtung zur Verstärkung optischer in einem ersten Mehrkern-Lichtwellenleiter (1) geführter Signalwellen, bei dem der erste Mehrkern-Lichtwellenleiter (1) mehrere Kerne (1') mit einem vorgegebenen Kernabstand und einer vorgegebenen Geometrie der Kerne (1') zueinander umfasst und in jedem Kern (1') wenigstens ein Signalwellenmodus ausbreitungsfähig ist und mit der jede Signalwelle in einem optisch gepumpten verstärkungsaktiven Lichtwellenleiter verstärkbar ist, wobei sie ein erstes feldtransformierendes optisches Element (2) umfasst mit welchem jede Signalwelle aus einem jeweiligen Kern (1') des ersten Mehrkern-Lichtwellenleiters (1) auskoppelbar ist und mit dem der räumliche Abstand der Signalwellen verschiedener Kerne (1') zueinander gegenüber dem vorgegebenen Kernabstand des ersten Mehrkern-Lichtwellenleiters (1) vergrößerbar ist und ein zweites feldtransformierendes optisches Element (2') umfasst, insbesondere das zum ersten invers arbeitet, mit welchem der räumliche, vergrößerte Abstand der Signalwellen verschiedener Kerne (1') auf einen vorgegebenen Kernabstand eines zweiten Mehrkern-Lichtwellenleiters (5) reduzierbar ist und mit dem jede Signalwelle in den korrespondierenden Kern (5') dieses zweiten Mehrkern-Lichtwellenleiters (5) einkoppelbar ist, wobei zwischen dem ersten und dem zweiten feldtransformierenden optischen Element (2, 2') jede Signalwelle eines jeden Kerns (1') mit einer individuell für jeden Kern (1') zugeführten Pumpwelle koaxial überlagert ist.

9. Vorrichtung nach Anspruch 8, **dadurch gekennzeichnet, dass** ein feldtransformierendes optische Element (2, 2') ausgebildet ist als Übergangs-Lichtwellenleiter, bei dem ein Ende (2a, 2a') einem Mehrkern-Lichtwellenleiter entspricht und das anderen Ende mehreren Einkern-Lichtwellenleitern (2b, 2b') entspricht, wobei jeder Einkern-Lichtwellenleiter (2b, 2b') genau einem Kern (1') des Mehrkern-Lichtwellenleiters (1) zugeordnet ist und die geometrische Anordnung der mehreren Einkern-Lichtwellenleiter (2b, 2b') derjenigen geometrischen Anordnung der mehreren Kerne (1', 5') des ersten und/oder zweiten Mehrkern-Lichtwellenleiters (1, 5) entspricht.

10. Vorrichtung nach Anspruch 8 oder 9, **dadurch gekennzeichnet, dass** eine Pumpwellenzuführung vorgesehen ist mit einer Anzahl von Einkern-Lichtwellenleitern (6), die der Anzahl der Kerne (1', 5') der Mehrkern-Lichtwellenleiter(1, 5) entspricht, wobei die Geometrie der Einkern-Lichtwellenleiter (6) derjenigen der Einkern-Lichtwellenleiter (2b, 2b') entspricht, mit denen die Signalwellen geführt sind.

11. Vorrichtung nach einem der vorherigen Ansprüche 8 bis 10 **dadurch gekennzeichnet, dass** die Signalwellen und Pumpwellen mit einem Linsenfeld (3, 3") parallelisiert sind und die parallelisierten Wellen in einer freien Propagationsstrecke zwischen erstem und zweitem feldtransformierenden Element (2, 2') mittels eines strahlkombinierenden Elements (4) überlagert sind, wobei die Linsen (3, 3") eines jeden Linsenfeldes identische Geometrie haben, die zur Geometrie der Einkern-Lichtwellenleiter (2b, 2b', 6) korrespondiert.

12. Vorrichtung nach Anspruch 11 **dadurch gekennzeichnet, dass** in der freien Propagationsstrecke wenigstens ein zusätzliches optisches Element angeordnet ist, insbesondere eine mikro-optische Freistrahlkomponente, insbesondere ein optischer Isolator oder ein teildurchlässiger Spiegel oder eine Vorrichtung zur Leistungsmessung oder eine Vorrichtung zur Durchführung einer sonstigen die Strahlüberlagerung nicht beeinflussenden Funktion.

13. Vorrichtung nach einem der vorherigen Ansprüche 8 bis 12 **dadurch gekennzeichnet, dass** die Pumpwellen mit einer Anzahl von Pumplichtquellen erzeugt ist, die kleiner ist als die Anzahl der Einkern-Lichtwellenleiter (6) der Pumpwellenzuführung, insbesondere wobei das Licht einer Pumplichtquelle optisch, insbesondere faseroptisch aufgespalten ist zur Ausbildung von wenigstens zwei Pumplichtwellen von einer Pumplichtquelle.

## Claims

1. Method for amplifying optical signal waves guided in a first multicore optical fibre (1), in which the first multicore optical fibre (1) comprises a plurality of cores (1') with a prescribed core spacing and a prescribed geometry of the cores (1') relative to one another, and at least one signal wave mode that is capable of propagation in each core (1'), and each signal wave being amplified in an optically pumped gain-active optical fibre, wherein a first optical field transformation (FT1) is carried out in which each signal wave is coupled out from a respective core (1') of the first multicore optical fibre (1), and the spacing of the signal waves of different cores (1') from one another is increased relative to the prescribed core spacing of the first multicore optical fibre (1), and a second optical field transformation (FT2), in particular one inverse to the first, is carried out in the case of which the increased spacing of the signal waves of different cores (1') is reduced to a prescribed core spacing of a second multicore optical fibre (5), and each signal wave is coupled into the corresponding core (5') of said second multicore optical fibre (5), a pump wave supplied individually for each core (1') being coaxially superimposed on each signal wave of each core (1') between the first and the second optical field transformation (FT1, FT2).

2. Method according to Claim 1, **characterized in that**, during a coaxial parallel superimposition of signal wave and pump wave, the second multicore optical fibre (5) or a multicore optical fibre subsequent thereto is designed as an optically pumped multicore optical fibre with gain-active cores (5'), in particular with laser-active erbium-doped cores or with Raman-active cores or, given a coaxial antiparallel superimposition, the first multicore optical fibre (1), or a multicore optical fibre upstream thereof is designed as an optically pumped multicore optical fibre with gain-active cores, in particular with Raman-active cores or with laser-active erbium-doped cores.

3. Method according to one of the preceding claims, **characterized in that** in the case of the first field transformation (FT1) each signal wave of a respective core (1') of the first multicore optical fibre (1) is transferred in each case into an individual single-core optical fibre (2b) assigned to the respective core (1'), in particular the geometrical arrangement of the individual single-core optical fibres (2b) relative to one another corresponding to the geometrical arrangement of the cores (1') of the first multicore optical fibre (1) and, in the case of the second field transformation (FT2), each signal wave propagating in a single-core optical fibre (2b') being transferred from the single-core optical fibre (2b') into an assigned core (5') of the second multicore optical fibre (5), in particular the geometrical arrangement of the single-core optical fibres (2b') relative to one another corresponding to the geometrical arrangement of the cores (5') of the second multicore optical fibre (5).

4. Method according to Claim 3, **characterized in that** each signal wave of a single-core optical fibre (2b) is superimposed, between first and second field transformation (FT1, FT2), in a single-core optical fibre (7a) with a pump wave which is supplied with a single-core optical fibre (6), in particular by means of a respective melting coupler (7) or a respective micro-optical free beam coupler.

5. Method according to Claim 3, **characterized in that**, given a free field propagation, each signal wave of each single-core optical fibre (2b) is coaxially superimposed between first and second field transformation (FT1, FT2) with a pump wave propagating in the free field, in particular by means of a dichroic mirror (4), after the first field transformation (FT1) each signal wave of each single-core optical fibre (2b) being coupled out from the single-core optical fibre (2b) and parallelized, and before the second field transformation (FT2) each parallelized signal wave being coupled into an assigned single-core optical fibre (2b').

6. Method according to Claim 5, **characterized in that** a number of pump waves corresponding to the number of cores of the first multicore optical fibre (1) is made available by means of a respective single-core optical fibre (6), the geometry of the single-core optical fibre (2b, 6) of signal waves and pump waves being identical.

7. Method according to Claim 5 or 6, **characterized in that** the signal waves are superimposed on the pump waves by reflection at an optical element traversed by the signal waves in transmission, in particular a dichroic mirror, or the pump waves are superimposed on the signal waves by reflection at an optical element traversed by the pump waves in transmission, in particular as a function of the insertion loss of the transmitted waves at the optical element.

8. Device for amplifying optical signal waves guided in a first multicore optical fibre (1), in which the first multicore optical fibre (1) comprises a plurality of cores (1') with a prescribed core spacing and a prescribed geometry of the cores (1') relative to one another, and at least one signal wave mode that is capable of propagation in each core (1'), and with the aid of which each signal wave can be amplified in an optically pumped gain-active optical fibre, wherein it comprises a first field-transforming optical element (2) with the aid of which each signal wave can be coupled out from a respective core (1') of the first multicore optical fibre (1) and with the aid of which it is possible to increase the spacing of the signal waves of different cores (1') from one another relative to the prescribed core spacing of the first multicore optical fibre (1), and comprises a second field-transforming optical element (2'), in particular which operates inversely relative to the first, with the aid of which the increased spacing of the signal waves of different cores (1') can be reduced to a prescribed core spacing of a second multicore optical fibre (5), and with the aid of which each signal wave can be coupled into the corresponding core (5') of said second multicore optical fibre (5), a pump wave supplied individually for each core (1') being coaxially superimposed on each signal wave of each core (1') between the first and the second field-transforming optical element (2, 2').

9. Device according to Claim 8, **characterized in that** a field-transforming optical element (2, 2') is designed as a transition optical fibre in which one end (2a, 2a') corresponds to a multicore optical fibre and the other end corresponds to a plurality of single-core optical fibres (2b, 2b'), each single-core optical fibre (2b, 2b') being assigned precisely one core (1') of the multicore optical fibre (1), and the geometrical arrangement of the plurality of single-core optical fibres (2b, 2b') corresponding to that geometrical arrangement of the plurality of cores (1', 5') of the first and/or second multicore optical fibre (1, 5).

10. Device according to Claim 8 or 9, **characterized in that** a pump waveguide is provided with a number of single-core optical fibres (6) which corresponds to the number of the cores (1', 5') of the multicore optical fibre (1, 5), the geometry of the single-core optical fibres (6) corresponding to that of the single-core optical fibres (2b, 2b') by means of which the signal waves are guided.

11. Device according to one of the preceding Claims 8 to 10, **characterized in that** the signal waves and pump waves are parallelized with aid of a lens field (3, 3"), and the parallelized waves are superimposed in a free propagation path between a first and second field-transforming element (2, 2') by means of a beam-combining element (4), the lenses (3, 3") of each lens field having an identical geometry which corresponds to the geometry of the single-core optical fibres (2b, 2b', 6).

12. Device according to Claim 11, **characterized in that** at least one additional optical element is arranged in the free propagation path, in particular a micro-optical free-beam component, in particular an optical isolator, or a partially transparent mirror or a device for power measurement or a device for carrying out some other function which does not influence the beam superimposition.

13. Device according to one of the preceding Claims 8 to 12, **characterized in that** the pump waves are generated with the aid of a number of pump light sources which is smaller than the number of the single-core optical fibres (6) of the pump waveguide, in particular the light of a pump light source being split optically, in particular by using fibre optics, in order to form at least two pump light waves from a pump light source.

## Revendications

1. Procédé d'amplification d'ondes de signal guidées dans un premier guide d'ondes optiques multi-coeurs (1), dans lequel le premier guide d'ondes optique multi-coeurs (1) comprend une pluralité de coeurs (1') présentant les uns par rapport aux autres un espacement entre coeurs prédéterminé et une géométrie prédéterminée des coeurs (1') et au moins un mode d'onde de signal est apte à se propager dans chaque coeur (1') et dans lequel chaque onde de signal est amplifiée dans un guide d'ondes optique à effet d'amplification pompé optiquement, dans lequel une première transformation de champ optique (FT1) est effectuée, lors de laquelle chaque onde de signal est couplée en sortie d'un coeur respectif (1') du premier guide d'ondes optique multi-coeurs (1) et dans lequel l'espacement spatial les unes par rapport aux autres des ondes de signal de coeurs différents (1') par rapport à l'espacement prédéterminé entre coeurs du premier guide d'ondes optique multi-coeurs (1) est augmenté et dans lequel une seconde transformation de champ optique (FT2), en particulier inverse de la première, est effectuée, lors de laquelle l'espacement spatial augmenté des ondes de signal de différents coeurs (1') est réduit à un espacement prédéterminé entre coeurs d'un second guide d'ondes optique multi-coeurs (5) et dans lequel chaque onde de signal est couplée en entrée dans le coeur correspondant (5') de ce second guide d'ondes optique multi-coeurs (5), dans lequel, entre les première et seconde transformations de champ optiques (FT1, FT2), chaque onde de signal d'un coeur (1') respectif est superposée coaxialement à une onde de pompage acheminée individuellement pour chaque coeur (1').

2. Procédé selon la revendication 1, **caractérisé en ce que**, lors d'une superposition parallèle coaxiale entre des ondes de signal et de pompage, le second guide d'ondes optique multi-coeurs (5) ou un guide d'ondes optique multi-coeurs situé en aval de celui-ci est réalisé sous la forme d'un guide d'ondes optique multi-coeurs pompé optiquement comportant des coeurs à effet d'amplification (5'), en particulier des coeurs dopés à l'erbium à effet laser ou des coeurs à effet Raman, ou **en ce que**, lors d'une superposition antiparallèle coaxiale, le premier guide d'ondes optique multi-coeurs (1) ou un guide d'ondes optique multi-coeurs disposé en amont de celui-ci est réalisé sous la forme d'un guide d'ondes optique multi-coeurs pompé optiquement comportant des coeurs à effet d'amplification, en particulier des coeurs à effet Raman ou des coeurs dopés à l'erbium à effet laser.

3. Procédé selon l'une quelconque des revendications précédentes, **caractérisé en ce que**, lors de la première transformation de champ (FT1), chaque onde de signal d'un coeur respectif (1') du premier guide d'ondes optique multi-coeurs (1) est respectivement transférée dans un guide d'ondes optique mono-coeur (2b) unique associé au cour respectif (1'), et plus particulièrement, dans lequel l'agencement géométrique les uns par rapport aux autres des guides d'ondes optiques mono-coeur (2b) uniques correspond à l'agencement géométrique des coeurs (1') du premier guide d'ondes optique multi-coeurs (1) et **en ce que**, lors de la seconde transformation de champ (FT2), chaque onde de signal se propageant dans un guide d'ondes optique mono-coeur (2b') est transférée depuis le guide d'ondes optique mono-coeur (2b') dans un coeur associé (5') du second guide d'ondes optique multi-coeurs (5), et plus particulièrement, dans lequel l'agencement géométrique les uns par rapport aux autres des guides d'ondes optiques mono-coeur (2b') correspond à l'agencement géométrique des coeurs (5') du second guide d'ondes optique multi-coeurs (5).

4. Procédé selon la revendication 3, **caractérisé en ce que**, entre les première et seconde transformations de champ (FT1, FT2), chaque onde de signal d'un guide d'ondes optique mono-coeur (2b) est superposée dans un guide d'ondes optique mono-coeur (7a) à une onde de pompage qui est acheminée au moyen d'un guide d'ondes optique mono-coeur (6), en particulier, au moyen d'un coupleur de fusion respectif (7) ou d'un coupleur de faisceaux libres micro-optique respectif.

5. Procédé selon la revendication 3, **caractérisé en ce que**, entre les première et seconde transformations de champ (FT1, FT2), chaque onde de signal d'un guide d'ondes optique mono-coeur (2b) est superposée coaxialement par propagation en champ libre à une onde de pompage se propageant en champ libre, et en particulier, au moyen d'un miroir dichroïque (4), dans lequel, après la première transformation de champ (FT1), chaque onde de signal de chaque guide d'ondes optiques mono-coeur (2b) est couplée en sortie du guide d'ondes optique mono-coeur (2b) et est parallélisée et **en ce que**, avant la seconde transformation de champ (FT2), chaque onde de signal parallélisée est couplée en entrée d'un guide d'ondes optique mono-coeur (2b') associé.

6. Procédé selon la revendication 5, **caractérisé en ce qu'**un nombre d'ondes de pompage correspondant au nombre de coeurs du premier guide d'ondes optique multi-coeurs (1) est fourni au moyen de chaque guide d'ondes optique mono-coeur (6), dans lequel les géométries des guides d'ondes optiques mono-coeur (2b, 6) des ondes de signal et des ondes de pompage sont identiques.

7. Procédé selon la revendication 5 ou 6, **caractérisé en ce que** les ondes de pompage sont superposées aux ondes de signal par réflexion sur un élément optique traversé en transmission par les ondes de signal, en particulier, sur un miroir dichroïque ou en ce que les ondes de signal sont superposées aux ondes de pompage par réflexion sur un élément optique traversé en transmission par les ondes de pompage, en particulier, en fonction de la perte d'insertion des ondes transmises au niveau de l'élément optique.

8. Dispositif d'amplification d'ondes de signal acheminées optiquement dans un premier guide d'ondes optique multi-coeurs (1), dans lequel le premier guide d'ondes optique multi-coeurs (1) comprend une pluralité de coeurs (1') présentant les uns par rapport aux autres un espacement entre coeurs prédéterminé et une géométrie prédéterminée des coeurs (1') et au moins un mode d'onde de signal est apte à se propager dans chaque coeur (1') et avec lequel chaque onde de signal est amplifiée dans un guide d'ondes optique à effet d'amplification pompé optiquement, dans lequel celui-ci comprend un premier élément optique de transformation de champ (2) avec lequel chaque onde de signal est couplée en sortie d'un coeur respectif (1') du premier guide d'ondes optique multi-coeurs (1) et avec lequel l'espacement spatial les unes par rapport aux autres des ondes de signal de différents coeurs (1') est augmenté par rapport à l'espacement prédéterminé entre coeurs du premier guide d'ondes optique multi-coeurs (1) et comprend un second élément optique de transformation de champ (2'), qui fonctionne en particulier de manière inverse au premier, avec lequel l'espacement spatial augmenté des ondes de signal des différents coeurs (1') peut être réduit à un espacement prédéterminé entre coeurs d'un second guide d'ondes optique multi-coeurs (5) et avec lequel chaque onde de signal peut être couplée en entrée dans le coeur correspondant (5') de ce second guide d'ondes optique multi-coeurs (5), dans lequel, entre les premier et second éléments optiques de transformation de champ (2, 2'), chaque onde de signal d'un coeur respectif (1') est superposée coaxialement à une onde de pompage acheminée individuellement pour chaque coeur (1').

9. Dispositif selon la revendication 8, **caractérisé en ce qu'**un élément optique de transformation de champ (2, 2') est réalisé sous la forme d'un guide d'ondes optique de transition, dans lequel une extrémité (2a, 2a') correspond à un guide d'ondes optique multi-coeurs et l'autre extrémité correspond à de multiples guides d'ondes optiques mono-coeur (2b, 2b'), dans lequel chaque guide d'ondes optique mono-coeur (2b, 2b') est associé à exactement un coeur (1') du guide d'ondes optique multi-coeurs (1) et l'agencement géométrique des multiples guides d'ondes optiques mono-coeur (2b, 2b') correspond à l'agencement géométrique des multiples coeurs (1', 5') du premier et/ou du second guide d'ondes optique multi-coeurs (1, 5).

10. Dispositif selon la revendication 8 ou 9, **caractérisé en ce qu'**il est prévu une entrée pour ondes de pompage comportant un nombre de guides d'ondes optiques mono-coeur (6) qui correspond au nombre des coeurs (1', 5') des guides d'ondes optiques multi-coeurs (1, 5), dans lequel la géométrie des guides d'ondes optiques mono-coeur (6) correspond à celle des guides d'ondes optiques mono-coeur (2b, 2b') au moyen desquels les ondes de signal sont acheminées.

11. Dispositif selon l'une quelconque des revendications 8 à 10, **caractérisé en ce que** les ondes de signal et les ondes de pompage sont parallélisées au moyen d'un champ de lentilles (3, 3") et **en ce que** les ondes parallélisées sont superposées au moyen d'un élément de combinaison de faisceaux (4) dans une étendue de propagation libre entre les premier et second éléments de transformation de champ (2, 2'), dans lequel les lentilles (3, 3") d'un champ de lentilles respectif présentent des géométries identiques qui correspondent aux géométries des guides d'ondes optiques mono-coeur (2b, 2b', 6).

12. Dispositif selon la revendication 11, **caractérisé en ce qu'**au moins un élément optique supplémentaire est disposé dans l'étendue de propagation libre, en particulier un composant de faisceau libre micro-optique, en particulier un isolateur optique ou un miroir partiellement transparent ou un dispositif de mesure de puissance ou un dispositif destiné à mettre en oeuvre une autre fonction n'ayant pas d'influence sur la superposition de faisceaux.

13. Dispositif selon l'une quelconque des revendications 8 à 12 précédentes, **caractérisé en ce que** les ondes de pompage sont générées au moyen d'un nombre de sources de lumière de pompage qui est inférieur au nombre de guides d'ondes optiques mono-coeur (6) de l'entrée d'ondes de pompage, en particulier, dans lequel la lumière d'une source de lumière de pompage est divisée par fibres optiques afin de former au moins deux ondes de lumière de pompage d'une source de lumière de pompage.
